# EUROPEAN PATENT APPLICATION

(11) **EP 4 528 846 A1**
(43) Date of publication of application: **26.03.2025**
(21) Application number: 24199369.0
(22) Date of filing: 10.09.2024
(51) Int. Cl.: H01M 4/134, H01M 4/38, H01M 4/62, H01M 4/66, H01M 4/133, H01M 4/1393, H01M 4/1395, H01M 4/02

(54) **NEGATIVE ELECTRODE FOR RECHARGEABLE LITHIUM BATTERY AND RECHARGEABLE LITHIUM BATTERY INCLUDING SAME**

(30) Priority: 12.09.2023 KR 20230121231
(71) Applicant: Samsung SDI Co., Ltd, Gyeonggi-do 17084 (KR)
(72) Inventor: Kim, Soochan, 17084 Gyeonggi-do (KR); Kim, Beom Kwon, 17084 Gyeonggi-do (KR); Kim, Minjun, 17084 Gyeonggi-do (KR); Jung, Hyeseung, 17084 Gyeonggi-do (KR); An, Hoyong, 17084 Gyeonggi-do (KR); Hong, Minyoung, 17084 Gyeonggi-do (KR)
(74) Representative: Michalski Hüttermann & Partner Patentanwälte mbB

(57) **Abstract**

A negative electrode for a rechargeable lithium battery and a rechargeable lithium battery including the same are provided. The negative electrode includes a current collector, a negative active material layer including a negative active material, and a coating layer between the current collector and the negative active material layer, the coating layer including an organic metal-based material, and a pattern shape.

## Description

### BACKGROUND

### 1. Field

Embodiments of the present disclosure relate to a negative electrode for a rechargeable lithium battery and a rechargeable lithium battery including the same.

### 2. Description of the Related Art

Recently, the rapid increase of electronic devices such as mobile phones, laptop computers, and electric vehicles utilizing batteries has led to extraordinary increases in demand or desire for rechargeable batteries with relatively high capacity and lighter weight. Accordingly, research into improving the performance of rechargeable lithium batteries is being actively studied or pursued.

Rechargeable lithium batteries include a positive electrode and a negative electrode, which include active material capable of intercalating and deintercalating lithium ions, and an electrolyte, and generate electrical energy due to the oxidation and reduction reaction that occurs when lithium ions are intercalated and deintercalated to and/or from the positive electrode and the negative electrode.

### SUMMARY

Aspects of one or more embodiments of the present disclosure relate to a negative electrode for a rechargeable lithium battery exhibiting excellent or suitable cycle-life characteristics and low resistance.

Aspects of one or more embodiments of the present disclosure relates to a rechargeable lithium battery including the negative electrode.

Additional aspects will be set forth in part in the description which follows and, in part, will be apparent from the description, or may be learned by practice of the presented embodiments of the disclosure.

One or more embodiments of the present disclosure provide a negative electrode for a rechargeable lithium battery including a current collector; a negative active material layer including a negative active material; and a coating layer between the current collector and the negative active material layer, the coating layer including an organic metal-based material and having a pattern shape.

One or more embodiments of the present disclosure provide a rechargeable lithium battery including the negative electrode; a positive electrode, and an electrolyte.

A negative electrode for a rechargeable lithium battery according to one or more embodiments, may exhibit excellent or suitable cycle-life characteristic and low resistance.

### BRIEF DESCRIPTION OF THE DRAWINGS

FIG. 1 is a schematic diagram showing a negative electrode for a rechargeable lithium battery according to one or more embodiments of the present disclosure.
FIG. 2 - FIG. 5 are each a schematic diagram showing a rechargeable lithium batterie according to one or more embodiments of the present disclosure.

### DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the spirit and scope of the present disclosure.

The illustrated embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

Unless otherwise noted, like reference numerals denote like elements throughout the attached drawings and the written description, and thus, duplicative descriptions thereof may not be provided. In the drawings, the relative sizes of elements, layers, and regions may be exaggerated for clarity.

Unless otherwise defined in the specification, it will be understood that when an element such as a layer, film, region, or substrate is referred to as being "on" another element, it can be directly on the other element or one or more intervening elements may also be present. In addition, it will also be understood that when an element or layer is referred to as being "between" two elements or layers, it can be the only element or layer between the two elements or layers, or one or more intervening elements or layers may also be present.

As used herein, the singular forms "a," "an" and "the" are intended to include the plural forms as well, unless the context clearly indicates otherwise. Unless otherwise defined, "A or B" may mean "including A or B, or including A and B". Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

It will be further understood that the terms "comprises," "comprising," "includes," and "including," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items.

As used herein, the term "combination thereof' may include a mixture, a laminate, a complex, a copolymer, an alloy, a blend, and/or a reactant of constituents.

In the present disclosure, when particles are spherical, "diameter" indicates a particle diameter or an average particle diameter, and when the particles are non-spherical, the "diameter" indicates a major axis length or an average major axis length. Unless otherwise defined in the specification, the diameter of the particles (*e.g*., the particle diameter) may be an average particle diameter. The particle diameter indicates an average particle diameter (D50) whose cumulative volume corresponds to 50 vol% in the particle size distribution (*e.g*., cumulative distribution), and refers to the value of the particle size corresponding to 50% from the smallest particle when the total number of particles is 100% in the distribution curve accumulated in the order of the smallest particle size to the largest particle size. The average particle diameter (D50) may be measured by a method generally available and/or generally utilized by those skilled in the art, for example, by a particle size analyzer, or a transmission electron microscope image, or a scanning electron microscope image. In one or more embodiments, a dynamic light-scattering measurement device is utilized to perform a data analysis, and the number of particles is counted for each particle size range, and from this, the average particle diameter (D50) value may be obtained (*e.g*., easily obtained) through a calculation, or a laser diffraction method. In one or more embodiments, it may be measured by a laser diffraction method. The laser diffraction may be obtained by distributing particles to be measured in a distribution solvent and introducing it to a commercially available laser diffraction particle measuring device (*e.g*., MT 3000 available from Microtrac, Inc.), irradiating ultrasonic waves of about 28 kHz at a power of 60 W, and calculating an average particle diameter (D50) in the 50 % standard of particle distribution in the measuring device.

A negative electrode for a rechargeable lithium battery according to one or more embodiments includes a current collector; a negative active material layer including a negative active material; and a coating layer between the current collector and the negative active material layer, the coating layer including an organic metal-based material and having a pattern shape.

The negative electrode according to one or more embodiments may increase the adhesion between the current collector and the active material layer by positioning an organic metal-based material in a pattern shape between the current collector and the active material layer. In one or more embodiments, the coating layer having the pattern shape refers to the coating layer being formed with a certain pattern rather than completely covering the surface of the current collector as a whole, and it may also refer to the coating layer having a coating portion and an uncoated portion.

For example, the pattern shape may be a net-shape, a dot-shape, a diagonal-shape, an oval-shape, a polygon-shape, a rhombus-shape, a linear-shape, a wave-shape, a triangular pyramid-shape, or any suitable combination thereof.

In one or more embodiments, the inclusion of the coating layer having a pattern shape in the negative electrode may be determined by computerized tomography analysis or by disassembling the battery to obtain the negative electrode, removing the current collector, and analyzing the components of each part.

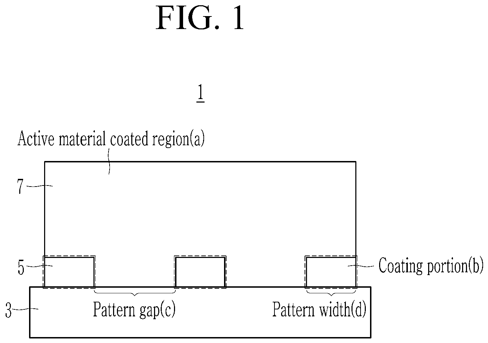

FIG. 1 is a schematic diagram of the negative electrode according to one or more embodiments of the present disclosure and shows a negative electrode 1 including a current collector 3, a coating layer 5, and a negative active material layer 7.

In the negative electrode according to one or more embodiments, an area of the coating layer may be about 10 % to about 50 %, about 15 % to about 50 %, or about 20 % to about 50 % based on the area 100 % of the negative active material layer. An area of the coating layer represents a ratio of area of the coating portion (b) relative to the 100 % cross-sectional area of the active material coated region (a) shown in FIG. 1 (*e.g*., a cross-sectional area in a direction perpendicular to a surface of the current collector 3). For example, compared to the area of 100 % of the active material layer, the area of the coating layer may be a percentage (%) of the area of the active material layer that is occupied by the coating layer and in contact with the active material layer.

As the coating layer has a pattern shape, for example, has a coated portion and an uncoated portion, the coating portion may impart adherence between the current collector and the active material layer, and the uncoated portion allows the active material layer to directly contact the current collector, thereby maintaining electrical conductivity. If (*e.g*., when) the coating layer at the aforementioned areas % is included in the negative electrode, the effects for maintaining adherence and electrical conductivity may be enhanced. If (*e.g*., when) the coating layer completely covers the negative active material layer, for example, is present at 100 % based on the total area of 100 % of the negative active material, the electrical conductivity may be extremely or substantially deteriorated.

In one or more embodiments, a gap (*see*, *e.g*., pattern gap (c) as shown in FIG. 1) between neighboring patterns (*e.g*., patterns adjacent to each other) may be about 20 µm or more, about 20 µm to about 100 µm, or about 20 µm to about 80 µm. The gap of the patterns, as shown in FIG. 1, may indicate a gap between one pattern and another pattern adjacent thereto. If (*e.g*., when) the gap of the patterns satisfies the above ranges, more excellent, desirable, or suitable electrical conductivity may be exhibited, without increases in the contact resistance between the current collector and the active material layer.

A width of the pattern (*see*, *e.g*., pattern width (d) as shown in FIG. 1) may be about 5 µm to about 30 µm, about 5 µm to about 25 µm, or about 5 µm to about 20 µm. The width of the pattern may be a width of one pattern, as shown in FIG. 1. If (*e.g*., when) the width of the pattern is within the above ranges, high adherence due to effective or substantially effective contact between the coating layer and the active material layer may be achieved.

In one or more embodiments, the area of the coating layer, the gap between neighboring patterns and the width of the pattern of the pattern shape may be determined by any techniques known in the related arts, and for example, SEM images.

A thickness of the coating layer may be appropriately or suitably adjusted, and thus the thickness of the coating layer is not particularly limited by the present disclosure and may be any suitable thickness.

In one or more embodiments, the organic metal-based material may be an organic metallic (*e.g*., organometallic) compound in which a central metal ion is coordinated with an organic ligand.

The central metal ion may be an alkaline-earth metal of (*e.g*., selected from among) Mg, Ca, and/or any suitable combination thereof; a transition metal of (*e.g*., selected from among) Zr, Ti, Ni, Mn, Co, V, Nb, Ta, Mo, W, Al, and/or any suitable combination thereof; a semi-metal of (*e.g*., selected from among) Si, Ge, and/or any suitable combination thereof; a rare earth elemental metal of (*e.g*., selected from among) Y, La, and/or any suitable combination thereof.

The organic ligand may be a compound having one, or two or more function groups of (*e.g*., selected from among) a carboxylic acid group, an anion group of carboxylic acid, an amino group, an imino group, an amide group, a sulfonic acid group, an anion group of a sulfonic acid, a methanedithioic acid group, an anion group of methanedithioic acid (-CS²⁻), a pyridine group, or a pyrazine group, and/or any suitable mixture thereof.

The organometallic compound may be a silane coupling agent. The silane coupling agent may include 3-aminopropyltriethoxysilane, 3-(2-aminoethyl)aminopropyltrimethoxysilane, 3-aminopropyltriethoxysilane, 3-(2-aminoethyl)aminopropylmethyldimethoxysilane, 4-aminobutyltriethoxysilane, and/or any suitable combination thereof.

The coating layer may further include a binder, a conductive material, and/or any suitable combination thereof. Amounts of the binder and the conductive material may be appropriately adjusted, and thus they are not particularly limited by the present disclosure and may be included in any suitable amounts.

The negative active material may include a carbon-based negative active material, a Si-based negative active material, and/or any suitable combination thereof.

The carbon-based negative active material may be crystalline carbon, amorphous carbon, and/or any suitable combination thereof. The crystalline carbon may include unspecified shaped, sheet shaped, flake shaped, spherical shaped and/or fiber-shaped natural graphite and/or artificial graphite, and/or any suitable combination thereof, and the amorphous carbon may be soft carbon, hard carbon, mesophase pitch carbide, a sintered coke, and/or the like.

The Si-based active material may be Si, a Si-C composite, SiOₓ (0<x≤2), a Si-Q alloy (wherein Q is an element of (*e.g*., selected from among) an alkali metal, an alkaline-earth metal, a Group 13 element, a Group 14 element (not Si), a Group 15 element, a Group 16 element, a transition metal, a rare earth element, and/or any suitable combination thereof), and/or any suitable combination thereof.

The silicon-carbon composite may be a composite of silicon and amorphous carbon. According to one or more embodiments, the Si-C composite may include silicon particles and an amorphous carbon coated on the surface of the silicon particles. For example, it may include secondary particles (core) in (*e.g*., each of) which silicon primary particles are agglomerated and an amorphous carbon coating layer (shell) on the surface of the secondary particles. In one or more embodiments, the amorphous carbon may be located between the silicon primary particles, for example, to coat the silicon primary particles. The secondary particle may be present by being distributed in an amorphous carbon matrix.

The silicon-carbon composite may also further crystalline carbon. For example, the silicon-carbon composite may include a core including crystalline carbon and silicon particles, and an amorphous carbon coating layer on the surface of the core.

The silicon particles (e.g., silicon primary particles) may be silicon nano particles (e.g., silicon particles in nanometer (nm) scale).

The silicon nano particles may have a particle diameter of about 10 nm to about 1,000 nm, may be about 10 nm to about 200 nm, or about 20 nm to about 150 nm. If (*e.g*., when) the average particle diameter of the silicon nano particles is within the above ranges, excessive volume expansion caused during charge and discharge may be suppressed or reduced, and a breakage of the conductive path due to crushing of particles may be prevented or reduced.

In the negative active material according to one or more embodiments, the silicon-carbon composite may include silicon nano particles as a core and an amorphous carbon coating layer on the surface of the silicon nano particles. In one or more embodiments, the silicon-carbon composite may include an agglomerated product (*e.g*., a secondary particle) where at least two silicon nano particles are agglomerated and an amorphous carbon coating layer is on the surface of the agglomerated product.

In the amorphous carbon coating layer, amorphous carbon may include soft carbon, hard carbon, mesophase pitch carbide, sintered coke, and/or any suitable combination thereof. The thickness of the amorphous carbon coating layer may be about 1 nm to about 2 µm, about 1 nm to about 500 nm, about 10 nm to about 300 nm, or about 20 nm to about 200 nm. If (*e.g*., when) the thickness of the amorphous carbon coating layer is within the above ranges, the volume expansion of silicon may be more better suppressed or reduced during charging and discharging.

The crystalline carbon may include unspecified shaped, sheet shaped, flake shaped, spherical shaped or fiber-shaped natural graphite and/or artificial graphite, and/or any suitable combination thereof.

If (*e.g*., when) the silicon-carbon composite includes silicon nano particles and an amorphous carbon coating layer, an amount of the silicon nano particles may be 30 wt% to 70 wt%, or about 40 wt% to about 65 wt% based on the total 100 wt% of the silicon-carbon composite. An amount of the amorphous carbon coating layer may be about 30 wt% to about 70 wt%, or about 35 wt% to about 60 wt% based on the total 100 wt% of the silicon-carbon composite.

If (*e.g*.,when) the silicon-carbon composite further includes crystalline carbon, an amount of the silicon nano particle may be about 20 wt% to about 70 wt% or about 25 wt% to about 65 wt% based on the total 100 wt% of the silicon-carbon composite. Based on the total 100 wt% of the silicon-carbon composite, an amount of the amorphous carbon may be about 25 wt% to about 70 wt% or about 25 wt% to about 60 wt%, and an amount of crystalline carbon may be about 1 wt% to about 20 wt%, or about 5 wt% to about 15 wt%.

In the negative active material layer, an amount of the negative active material may be about 95 wt% to about 98 wt% based on the total 100 wt% of the negative active material layer.

The negative active material layer may include a binder, and may further include a conductive material. An amount of the binder may be about 1 wt% to about 5 wt% based on the total 100 wt% of the negative active material layer. An amount of the conductive material may be about 1 wt% to about 5 wt% based on the total 100 wt% of the negative active material layer.

The binder may serve to attach (*e.g*., to effectively attach) the negative active material particles to each other and also to attach (*e.g*., to effectively attach) the negative active material to the current collector. The binder may include a non-aqueous binder, an aqueous binder, a dry binder, or any suitable combination thereof.

The non-aqueous binder may be polyvinyl chloride, carboxylated polyvinylchloride, polyvinyl fluoride, ethylene propylene copolymer, polystyrene, polyurethane, polytetrafluoroethylene, polyvinylidene fluoride, polyethylene, polypropylene, polyamideimide, polyimide, and/or any suitable combination thereof.

The aqueous binder may include a styrene-butadiene rubber, a (meth)acrylated styrene-butadiene rubber, a (meth)acrylonitrile-butadiene rubber, a (meth)acryl rubber, a butyl rubber, a fluorine rubber, polyethylene oxide, polyvinyl pyrrolidone, polyepichlorohydrin, polyphosphazene, poly(meth)acrylonitrile, an ethylene propylene diene copolymer, polyvinyl pyridine, chlorosulfonated polyethylene, latex, a polyester resin, a (meth)acryl resin, a phenol resin, an epoxy resin, polyvinyl alcohol, and/or any suitable combination thereof.

The negative binder may include a cellulose-based compound, or may be the cellulose-based compound together with the aqueous binder. The cellulose-based compound includes one or more of carboxymethyl cellulose, hydroxypropyl methyl cellulose, methyl cellulose, or alkali metal salts thereof. The alkali metal may be Na, K, or Li. The cellulose-based compound may serve as a binder and may serve as a thickener capable of imparting viscosity. Thus, the cellulose-based compound may be utilized at a suitable amount within the amount of the binder, but may be about 0.1 parts by weight to about 3 parts by weight based on 100 parts by weight of the negative active material.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or any suitable combination thereof.

The conductive material is included to provide electrode conductivity, and any electrically conductive material may be utilized as a conductive material unless it causes a chemical change. Examples of the conductive material may be a carbon-based material such as natural graphite, artificial graphite, carbon black, acetylene black, ketjen black, a carbon fiber, a carbon nanofiber, a single-walled carbon nanotube, a multi-walled carbon nanotube, and/or the like; a metal-based material of a metal powder or a metal fiber including copper, nickel, aluminum, silver, and/or the like; a conductive polymer such as a polyphenylene derivative; and/or any suitable mixture thereof.

The current collector may include one of (*e.g*., one selected from among) a copper foil, a nickel foil, a stainless steel foil, a titanium foil, a nickel foam, a copper foam, a polymer substrate coated with a conductive metal, and/or any suitable combination thereof, but present disclosure is not limited thereto.

### Preparation of negative electrode

The negative electrode according to one or more embodiments may be prepared by the following procedure.

A coating layer composition including an organic metal-based material and a solvent is pattern coated on a current collector and dried to prepare a coating layer. The solvent may be water, an organic solvent, or any suitable combination thereof. The organic solvent may be alcohols such as methanol, ethanol, propanol, isopropanol, and/or the like.

The pattern coating may be carried out by a gravure coating, a 2-roll reverse coating, a screen coating, a slot-die coating, or a 2-roll coating. However, the pattern coating may be carried out by any coating procedure generally utilized in the related art, as long as it may produce a suitable pattern.

Thereafter, a negative active material layer composition is coated on the coating layer and dried to prepare a negative active material layer. Thereafter, a pressurization may be carried out to prepare a negative electrode.

The negative active material layer composition includes a negative active material, a binder, and optionally, a conductive material, and a solvent. The solvent may be an organic solvent such as N-methyl pyrrolidone, or water.

### Rechargeable lithium battery

one or more embodiments of the present disclosure provide a rechargeable lithium battery including a negative electrode, a positive electrode, and an electrolyte.

The negative electrode may be the negative electrode according to one or more embodiments of the present disclosure.

### Positive electrode

The positive electrode may include a current collector and a positive active material layer on the current collector.

The positive active material layer may include a positive active material and may further include a binder and/or a conductive material. For example, the positive electrode may further include an additive that may serve as a sacrificial positive electrode.

The positive active material may include a compound (lithiated intercalation compound) that is capable of intercalating and deintercalating lithium. In one or more embodiments, at least one of a composite oxide of lithium and a metal of (*e.g*., selected from among) cobalt, manganese, nickel, and/or any suitable combination(s) thereof may be utilized.

The composite oxide may be a lithium transition metal composite oxide. Examples of the composite oxide may include a lithium nickel-based oxide, lithium cobalt-based oxide, lithium manganese-based oxide, lithium iron phosphate-based compound, cobalt-free nickel-manganese-based oxide, and/or any suitable combination thereof.

For example, a compound represented by (e.g., at least one or one or more of) the following Chemical Formulas may be utilized: LiₐA_{1-b}X_{b}O_{2-c}D_{c} (0.90≤a≤1.8, 0 ≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}Co_{b}X_{c}O₂₋ₐDₐ (0.90≤a≤1.8, 0≤b≤0.5, 0≤c≤0.5, 0<α<2); LiₐNi_{1-b-c}Mn_{b}X_{c}O_{2-α}O_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤ 0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤ 0.1); LiₐMn₂G_{b}O₄ (0.90≤a≤1.8, 0.001≤b≤0.1); LiₐMn_{1-g}G_{g}PO₄ (0.90≤a≤1.8, 0≤g≤ 0.5); Li_{(3-f)}Fe₂(PO₄)₃ (0≤f≤2); and/or LiₐFePO₄ (0.90≤a≤1.8).

In the above Chemical Formulas, A is Ni, Co, Mn, or any suitable combination thereof; X is Al, Ni, Co, Mn, Cr, Fe, Mg, Sr, V, a rare earth element and/or any suitable combination thereof; D is O, F, S, P, and/or any suitable combination thereof; G is Al, Cr, Mn, Fe, Mg, La, Ce, Sr, V, and/or any suitable combination thereof; and L¹ is Mn, Al, and/or any suitable combination thereof.

The positive active material may be, for example, a high nickel-based positive active material having a nickel content (e.g., amount) of greater than or equal to about 80 mol%, greater than or equal to about 85 mol%, greater than or equal to about 90 mol%, greater than or equal to about 91 mol%, or greater than or equal to about 94 mol% and less than or equal to about 99 mol% based on 100 mol% of the metal excluding lithium in the lithium transition metal composite oxide. The high-nickel-based positive active material may be capable of realizing high capacity and may be applied to a high-capacity, high-density rechargeable lithium battery.

In the positive electrode, an amount of the positive active material may be about 90 wt% to about 98 wt% based on the total weight of the positive active material layer. Amounts of the binder and the conductive material may be each about 1 wt% to about 5 wt% based on the total weight of the positive active material layer.

The binder serves to attach (*e.g*., effectively attach) the positive active material particles to each other and also to attach (*e.g*., effectively attach) the positive electrode active material to the current collector. Examples of the binder may include polyvinyl alcohol, carboxymethyl cellulose, hydroxypropyl cellulose, diacetyl cellulose, polyvinyl chloride, carboxylated polyvinyl chloride, polyvinyl fluoride, a polymer including ethylene oxide, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and/or the like, as non-limiting examples.

The conductive material may be utilized to impart conductivity (*e.g*., electrical conductivity) to the electrode. Any material that does not cause chemical change (*e.g*., does not cause an undesirable chemical change in the rechargeable lithium battery) and conducts electrons can be utilized in the battery. Examples of the conductive material may include a carbon-based material such as natural graphite, artificial graphite, carbon black, acetylene black, ketjen black, a carbon fiber, a carbon nanofiber, and/or carbon nanotube; a metal-based material containing copper, nickel, aluminum, silver, etc., in a form of a metal powder or a metal fiber; a conductive polymer such as a polyphenylene derivative; and/or any suitable mixture thereof.

Al may be utilized as the current collector, but the present disclosure is not limited thereto.

### Electrolyte

The electrolyte includes a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or any suitable combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like. The ether-based solvent may include dibutyl ether, tetraglyme, diglyme, dimethoxyethane, 2-methyltetrahydrofuran, 2,5-dimethyltetrahydrofuran, tetrahydrofuran, and/or the like. The ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, and may include a double bond, an aromatic ring, or an ether bond, and/or the like); amides such as dimethylformamide; dioxolanes such as 1,3-dioxolane, 1,4-dioxolane, and/or the like; sulfolanes, and/or the like.

The non-aqueous organic solvents may be utilized alone or in a combination of two or more.

If (*e.g*., when) utilizing a carbonate-based solvent, a cyclic carbonate and a chain carbonate may be mixed and utilized, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one of (e.g., at least one selected from among) LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂)(wherein x and y are integers of 1 to 20), lithium trifluoromethane sulfonate, lithium tetrafluoroethanesulfonate, lithium difluorobis(oxalato)phosphate (LiDFOB), and/or lithium bis(oxalato) borate(LiBOB).

### Separator

Depending on the type or kind of the rechargeable lithium battery, a separator may be present between the positive electrode and the negative electrode. The separator may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces of the porous substrate.

The porous substrate may be a polymer film formed of any one of (*e.g*., any one selected from among) polyolefin such as polyethylene and polypropylene, polyester such as polyethylene terephthalate and polybutylene terephthalate, polyacetal, polyamide, polyimide, polycarbonate, polyether ketone, polyaryl ether ketone, polyetherimide, polyamideimide, polybenzimidazole, polyethersulfone, polyphenylene oxide, a cyclic olefin copolymer, polyphenylene sulfide, polyethylene naphthalate, a glass fiber, polytetrafluoroethylene (PTFE), TEFLON, and/or, and/or a copolymer or suitable mixture of two or more thereof.

The organic material may include a polyvinylidene fluoride-based polymer or a (meth)acrylic polymer.

The inorganic material may include inorganic particles of (*e.g*., selected from among) Al₂O₃, SiO₂, TiO₂, SnO₂, CeO₂, MgO, NiO, CaO, GaO, ZnO, ZrO₂, Y₂O₃, SrTiOs, BaTiOs, Mg (OH)₂, boehmite, and/or any suitable combination thereof, but the present disclosure is not limited thereto.

The organic material and the inorganic material may be mixed in one coating layer, or a coating layer including an organic material and a coating layer including an inorganic material may be stacked.

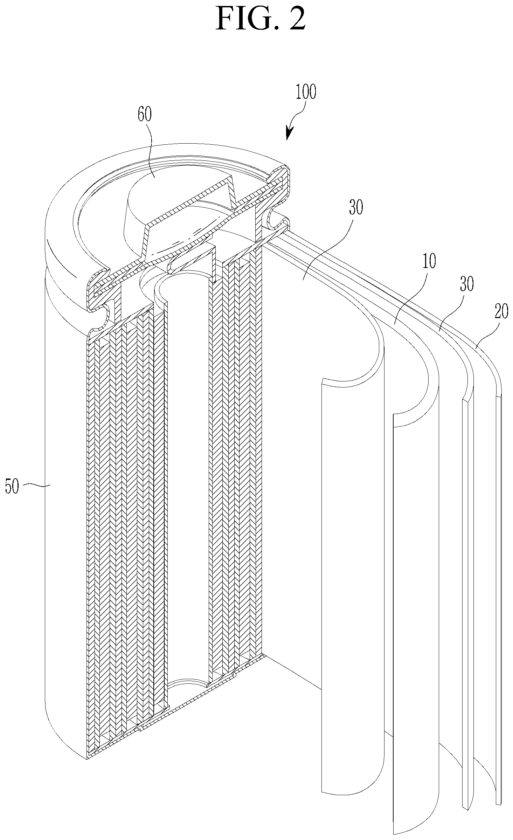

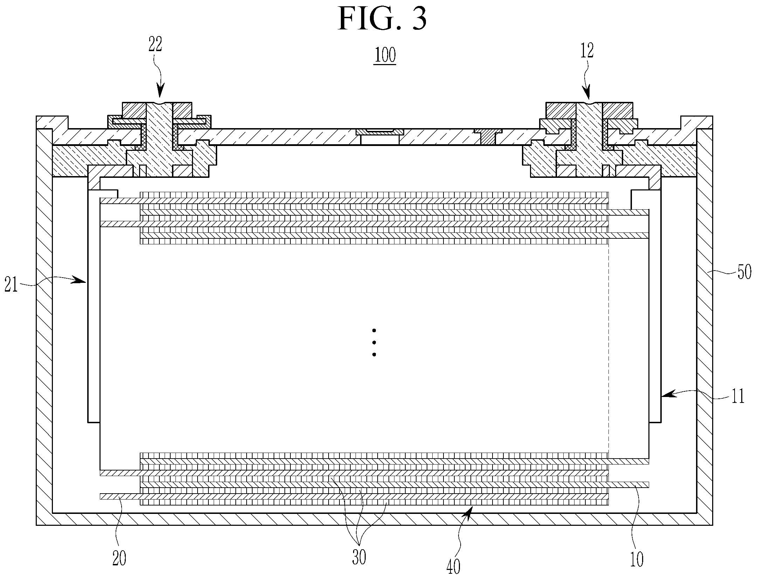

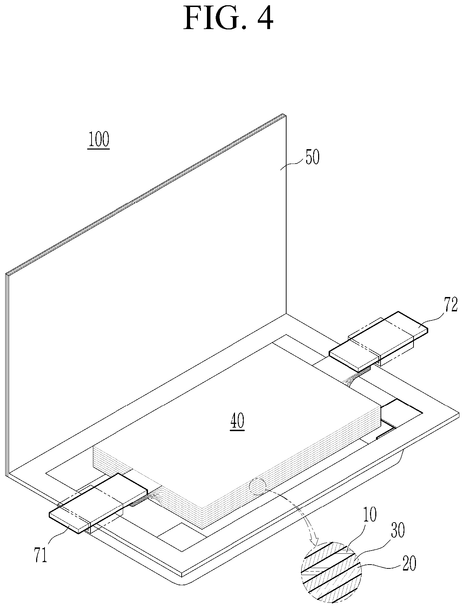

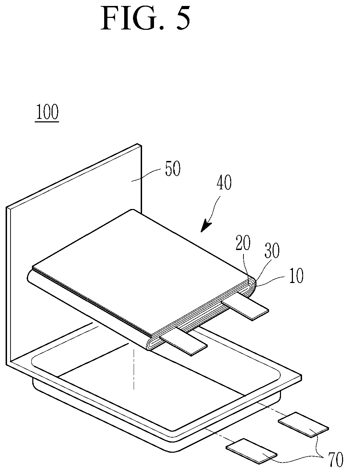

The rechargeable lithium battery may be classified into cylindrical, prismatic, pouch, or coin-type or kind batteries, and/or the like depending on their shape. FIGs. 2 to 5 are each a schematic view illustrating a rechargeable lithium battery according to one or more embodiments of the present disclosure. FIG. 2 shows a cylindrical battery, FIG. 3 shows a prismatic battery, and FIGs. 4 and FIG. 5 show pouch-type or kind batteries. Referring to FIGs. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIG. 4 and FIG. 5, the rechargeable lithium battery 100 may include an electrode tab 70, which may be, for example, a positive electrode tab 71 and a negative electrode tab 72 serving as an electrical path for inducing the current formed in the electrode assembly 40 to the outside.

The rechargeable lithium battery according to one or more embodiments may be applied to automobiles, mobile phones, and/or one or more suitable types (kinds) of electric devices, as non-limiting examples.

The following Examples and Comparative Examples are provided in order to highlight characteristics of one or more embodiments, but it will be understood that the Examples and Comparative Examples are not to be construed as limiting the scope of the present disclosure, nor are the Comparative Examples to be construed as being outside the scope of the present disclosure. Further, it will be understood that the present disclosure is not limited to the particular details described in the Examples and Comparative Examples.

### Example 1

A 3-aminopropyltriethoxysilane coupling agent was added to an ethanol to prepare a coating layer slurry.

97.5 wt% of a silicon-carbon composite negative active material, 1.5 wt% of carboxymethyl cellulose, and 1 wt% of a styrene butadiene rubber were mixed in a water solvent to prepare a negative active material layer slurry.

The silicon-carbon composite included an agglomerated product, *i.e*., secondary particles where silicon nano particles with an average particle diameter of 100 nm were agglomerated and a soft carbon coating layer was present on the surface of the agglomerated product, and based on the total 100 wt% of the silicon-carbon composite, an amount of the silicon nano particle was 60 wt% and an amount of the soft carbon amorphous carbon was 40 wt%. A thickness of the soft carbon coating layer was 100 nm.

The coating layer slurry was gravure pattern coated on a Cu foil current collector to prepare a coating layer having a pattern shape in order to cover a 20 % area relative to the total area 100 % of the negative active material layer. Thereafter, the negative active material layer slurry was coated on the obtained product, dried, and pressurized to prepare a negative electrode in which the current collector, the coating layer, and the negative active material layer were formed.

The width of the pattern was 5 µm and the gap between the neighboring patterns was 20 µm.

The negative electrode, a lithium metal counter electrode, and an electrolyte were utilized to fabricate a half-cell by a generally available procedure. The electrolyte was utilized by dissolving 1 M LiPF₆ in a mixed solvent of ethylene carbonate and dimethyl carbonate (3:7 volume ratio).

### Example 2 to 4

A negative electrode and a half-cell were fabricated by substantially the same procedure as in Example 1, except that the area % of the coating layer, the width of the pattern, and the gap between the neighboring patterns were changed as shown in the Table 1.

### Comparative Example 1

97.5 wt% of a silicon-carbon composite negative active material, 1.5 wt% of carboxymethyl cellulose, and 1 wt% of a styrene butadiene rubber were mixed in a water solvent to prepare a negative active material layer slurry.

The silicon-carbon composite included an agglomerated product, *i.e*., secondary particles where silicon nano particles with an average particle diameter of 100 nm were agglomerated and a soft carbon coating layer was present on the surface of the agglomerated product, and based on the total 100 wt% of the silicon-carbon composite, an amount of the silicon nano particle was 60 wt% and an amount of the soft carbon amorphous carbon was 40 wt%. A thickness of the soft carbon coating layer was 100 nm.

The negative active material layer slurry was coated on a Cu foil current collector, dried, and pressurized to prepare a negative electrode in which the current collector, and the negative active material layer were formed.

The negative electrode was utilized to fabricate a half-cell by substantially the same procedure as in Example 1.

### Comparative Example 2

The coating layer slurry of Example 1 was fully coated on a Cu foil current collector, dried, and pressurized to prepare a coating layer. The area % of the coating layer was 100 % relative to the total area 100 % of the negative active material layer.

Thereafter, the negative active material layer slurry of Example 1 was coated on the coating layer, dried, and pressurized to prepare a negative electrode having the current collector, the coating layer, and the negative active material layer.

The negative electrode was utilized to fabricate a half-cell by substantially the same procedure as in Example 1.

### Comparative Example 3

A negative electrode and a half-cell were fabricated by substantially the same procedure as in Example 1, except that a styrene-butadiene rubber was utilized instead of the 3-aminopropyltriethoxy silane coupling agent to prepare a coating layer slurry.

### Comparative Example 4 and 5

A negative electrode and a half-cell were fabricated by substantially the same procedure as in Example 1, except that the area % of the coating layer, a width of the pattern, and a gap between the neighboring patterns were changed into those shown the Table 1.

### Experimental Example 1) Evaluation of adherence

The adherence between the current collector and the negative active material layer of Examples 1 to 4 and Comparative Examples 1 to 5 were evaluated by utilizing a tensile tester (available from SHIMADZU Corporation) according to the 90 degrees (°) peel test method at a condition of 100 mm/min. The results are shown in Table 1.

### Experimental Example 2) Evaluation of specific resistance of negative electrode

The specific resistances of the negative electrodes according to Examples 1 to 4 and Comparative Examples 1 to 5, were measured by a resistance meter available from HIOKI, Co. Ltd. (resistance value passed in the vertical direction of the negative electrode, through plane). The results are shown in Table 1.

**Table 1**

| | Coating layer area% | Width of pattern (µm) | Gap of pattern (µm) | Adherence (gf/mm) | Specific resistance (Ωm) |
|---|---|---|---|---|---|
| Example 1 | 20 | 5 | 20 | 2.17 | 0.23 |
| Example 2 | 10 | 5 | 45 | 1.69 | 0.22 |
| Example 3 | 50 | 20 | 20 | 2.73 | 0.29 |
| Example 4 | 20 | 20 | 80 | 2.04 | 0.26 |
| Comparative Example 1 | 0 | - | - | 1.08 | 0.21 |
| Comparative Example 2 | 100 | - | - | Unable to measure | Unable to measure |
| Comparative Example 3 | 20 | 5 | 20 | 3.41 | 2.24 |
| Comparative Example 4 | 9 | 5 | 50 | 1.17 | 0.21 |
| Comparative Example 5 | 54 | 20 | 17 | 3.71 | 0.42 |

As shown in Table 1, the negative electrodes of Examples 1 to 4 exhibited excellent or suitable adherence and low specific resistance.

Comparative Example 1, without a coating layer, exhibited extremely low adherence. Comparative Example 2 in which the coating layer was formed at 100 % relative to 100 % of the negative active material layer, showed extremely high adherence and had unmeasurably high specific resistance.

Comparative Example 4 having an extremely lower area % of the coating layer exhibited too little adherence, and Comparative Example 5 having an extremely higher area % of the coating layer showed too high specific resistance.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within ± 30%, 20%, 10%, 5% of the stated value.

Also, any numerical range recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Further, the use of "may" when describing embodiments of the present disclosure refers to "one or more embodiments of the present disclosure."

The portable device, vehicle, and/or the battery, *e.g*., a battery controller, and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

Although the embodiments of the present disclosure have been described, it is understood that the present disclosure should not be limited to these embodiments, but one or more suitable changes and modifications can be made by one ordinary skilled in the art within the spirit and scope of the present disclosure as defined by the following claims and equivalents thereof.

## Claims

1. A negative electrode (1) comprising:
a current collector (3);
a negative active material layer (7) comprising a negative active material; and
a coating layer (5) between the current collector (3) and the negative active material layer (7), the coating layer (5) comprising an organic metal-based material and having a pattern shape,
wherein the negative electrode (1) is for a rechargeable lithium battery (100).

2. The negative electrode (1) as claimed in claim 1, wherein the organic metal-based material comprises an organometallic compound in which a central metal ion is coordinated with an organic ligand.

3. The negative electrode (1) as claimed in claim 1 or 2, wherein the organic metal-based material comprises an organometallic compound in which a central metal ion is coordinated with an organic ligand and wherein the central metal ion comprises at least one of: an alkaline-earth metal selected from among Mg, Ca, and a combination thereof; a transition metal selected from among Zr, Ti, Ni, Mn, Co, V, Nb, Ta, Mo, W, Al and a combination thereof; a semi-metal selected from among Si, Ge, and a combination thereof; or a rare earth elemental metal selected from among Y, La, and a combination thereof.

4. The negative electrode (1) as claimed in any one of claims 1 to 3, wherein the organic metal-based material comprises an organometallic compound in which a central metal ion is coordinated with an organic ligand and wherein the organic ligand comprises a compound having one or more function groups selected from among: a carboxylic acid group; an anion group of carboxylic acid, an amino group, an imino group, an amide group, a sulfonic acid group, an anion group of a sulfonic acid, a methanedithioic acid group, an anion group of methanedithioic acid, a pyridine group, or a pyrazine group; and a mixture thereof.

5. The negative electrode (1) as claimed in any one of claims 1 to 4, wherein the organometallic compound comprises a silane coupling agent.

6. The negative electrode (1) as claimed in any one of claims 1 to 5, wherein the organometallic compound comprises a silane coupling agent and wherein the silane coupling agent comprises 3-aminopropyltriethoxysilane, 3-(2-aminoethyl)aminopropyltrimethoxysilane, 3-aminopropyltriethoxysilane, 3-(2-aminoethyl)aminopropylmethyldimethoxysilane, 4-aminobutyltriethoxysilane, or a combination thereof.

7. The negative electrode (1) as claimed in any one of claims 1 to 6, wherein the coating layer (5) has an area of about 10 % to about 50 % based on the total area 100 % of the negative active material layer (7).

8. The negative electrode (1) as claimed in any one of claims 1 to 7, wherein a gap between neighboring patterns in the pattern shape is about 20 µm or more, and preferably, wherein the gap between the neighboring patterns is about 20 µm to about 100 µm.

9. The negative electrode (1) as claimed in any one of claims 1 to 8,
wherein a pattern of the pattern shape has a width of about 5 µm to about 30 µm; and/or
wherein the pattern shape comprises a net-shape, a dot-shape, a diagonal-shape, an oval-shape, a polygon-shape, a rhombus-shape, a linear-shape, a wave-shape, a triangular pyramid-shape, or a combination thereof.

10. The negative electrode (1) as claimed in any one of claims 1 to 9, wherein the negative active material comprises a carbon-based negative active material, a Si-based negative active material, or a combination thereof.

11. The negative electrode (1) as claimed in any one of claims 1 to10, wherein the negative active material comprises the carbon-based negative active material and the carbon-based material further comprises crystalline carbon, amorphous carbon, or a combination thereof.

12. The negative electrode (1) as claimed in any one of claims 1 to 11, wherein the negative active material comprises the Si-based negative active material and the Si-based negative active material comprises silicon, a silicon-carbon composite, SiOₓ (0<x≤2), a Si-Q alloy (where the Q is an alkali metal, an alkaline-earth metal, a Group 13 element, a Group 14 element (not Si), a Group 15 element, a Group 16 element, a transition metal, a rare earth element, or a combination thereof), or combination thereof.

13. The negative electrode (1) as claimed in any one of claims 1 to 12, wherein the negative active material layer (7) further comprises a binder.

14. The negative electrode (1) as claimed in any one of claims 1 to 13, wherein the negative active material layer (7) further comprises a conductive material.

15. A rechargeable lithium battery (100), comprising:
the negative electrode (20) as claimed in any one of claims 1 to 14;
a positive electrode (10); and
an electrolyte.
